# EUROPEAN PATENT APPLICATION

(11) **EP 2 533 135 A1**
(43) Date of publication of application: **12.12.2012**
(21) Application number: 11739583.0
(22) Date of filing: 04.02.2011
(51) Int. Cl.: G06F 3/041, G06F 3/048

(54) **COORDINATE INPUT DEVICE, COORDINATE INPUT METHOD, COORDINATE INPUT PROGRAM, AND PORTABLE TERMINAL**

(30) Priority: 05.02.2010 JP 2010024404
(71) Applicant: Panasonic Corporation, Kadoma-shi Osaka 571-8501 (JP)
(72) Inventor: TAKAHASHI, Katsunao, Osaka-shi, Osaka 540-6207 (JP)
(74) Representative: Grünecker, Kinkeldey, Stockmair & Schwanhäusser
(86) International application number: PCT/JP2011/000649
(87) International publication number: WO 2011/096234

(57) **Abstract**

Provided is a coordinate input device by which a user can determine a desired function by performing a predetermined contact manipulation without bothering with a direction of the device. The coordinate input device includes a contact coordinate input unit; an obtaining unit for detecting a first predetermined manipulation for the contact coordinate input unit, and obtaining coordinate information on the contact coordinate input unit; a storing unit for storing a coordinate and a function in association with each other; a generating unit for generating a manipulation reference on the contact coordinate input unit, on the basis of the coordinate information obtained by the obtaining unit; a determining unit for determining the function stored by the storing unit in association with the coordinates on the basis of different coordinate information on the contact coordinate input unit that corresponds to a second predetermined manipulation, by performing the second predetermined manipulation for the contact coordinate input unit after the generating unit generates the manipulation reference.

## Description

### Technical Field

The present invention relates to a coordinate input device, a coordinate input method, a coordinate input program, and a portable terminal.

### Background Art

Patent Literature 1 discloses a driving method for a touch panel which allows a user to manipulate an initial touch panel to thereby perform various functions by touching any one screen area on a touch panel screen in which different functions are assigned to each screen area thereof.

### Citation List

### Patent Literature

Patent Literature 1: JP-A-2008-9668

### Summary of Invention

### Technical Problem

However, in case where the driving method of the touch panel disclosed in Patent Literature 1 is applied to touch panel screens of portable terminals such as mobile phones, etc., the top and bottom of each of the touch panel screens have already been determined. Accordingly, for example, if a user manipulates a portable terminal without looking at the touch panel screen in a state that the portable terminal is in a pocket or in a bag, there are many cases where the user does not know where the top and bottom thereof is positioned. Thus, in case where a user touches a touch panel screen without looking at the touch panel screen, even though the user touches a screen area on the touch panel screen, there may be a case where the user touches a screen area assigned with a different operation from a desired operation. Therefore, in Patent Literature 1, there is a problem that a user cannot manipulate a portable terminal as the user desires.

The present invention has been made in an effort to solve the foregoing situation, and an object of the present invention is to provide a coordinate input device, a coordinate input method, a coordinate input program, and a portable terminal, by which a user may select any desired function by performing a predetermined contact manipulation without distinguishing directions of a device.

### Solution to Problems

The present invention provides a coordinate input device, including: a contact coordinate input unit; an obtaining unit that is configured to detect a first predetermined manipulation for the contact coordinate input unit, and obtain coordinate information on the contact coordinate input unit; a storing unit for storing a coordinate and a function in association with each other; a generating unit that is configured to generate a manipulation reference on the contact coordinate input unit, on the basis of the coordinate information obtained by the obtaining unit; and a determining unit that is configured to determine the function stored by the storing unit in association with the coordinate on the basis of different coordinate information on the contact coordinate input unit that corresponds to a second predetermined manipulation, by performing the second predetermined manipulation for the contact coordinate input unit after the generating unit generates the manipulation reference.

In the coordinate input device, the obtaining unit obtains the coordinate information on the contact coordinate input unit in response to a two-time tap manipulation as the first predetermined manipulation for the contact coordinate input unit, and obtains different coordinate information on the contact coordinate input unit in response to the tap manipulation as the second predetermined manipulation for the contact coordinate input unit, the generating unit generates a manipulation reference on the contact coordinate input unit on the basis of the coordinate information obtained by the obtaining unit, and the determining unit associates the manipulation reference generated by the generating unit with the coordinate stored by the storing unit, and determines the function stored by the storing unit in association with the coordinate, on the basis of the different coordinate information obtained by the obtaining unit.

In the coordinate input device, the obtaining unit obtains the coordinate information on the contact coordinate input unit in response to a one-time tap manipulation and a one-time long depression manipulation as the first predetermined manipulation for the contact coordinate input unit, and obtains different coordinate information on the contact coordinate input unit in response to a tap manipulation as the second predetermined manipulation for the contact coordinate input unit, the generating unit generates a manipulation reference on the contact coordinate input unit on the basis of the coordinate information obtained by the obtaining unit, and the determining unit associates the manipulation reference generated by the generating unit with the coordinate stored by the storing unit, and determines the function stored by the storing unit in correspondence with the coordinate, on the basis of the different coordinate information obtained by the obtaining unit.

In the coordinate input device, the obtaining unit obtains the coordinate information on the contact coordinate input unit and the different coordinate information on the contact coordinate input unit in response to a trace manipulation as the first predetermined manipulation and the second predetermined manipulation for the contact coordinate input unit, the generating unit generates a manipulation reference on the contact coordinate input unit on the basis of the coordinate information obtained by the obtaining unit, and the determining unit associates the manipulation reference generated by the generating unit with the coordinate stored by the storing unit, and determines the function stored by the storing unit in association with the coordinate, on the basis of the different coordinate information obtained by the obtaining unit.

In the coordinate input device, the obtaining unit obtains first to third coordinate information in response to the first predetermined manipulation and the second predetermined manipulation for the contact coordinate input unit for three times, the generating unit generates the reference line on the basis of the first coordinate information and the second coordinate information obtained by the first predetermined manipulation, the storing unit has a command plane on which the function is associated with the coordinate on a first axis and a second axis crossing at right angles with the first axis, and the determining unit rotates the command plane so that the reference line is overlapped with any one axis of the first axis and the second axis of the command plane, and determines the function on the command plane corresponding to the third coordinate information.

In the coordinate input device, any one axis of the first axis and the second axis of the command plane is provided with a different reference line, and the determining unit rotates and enlarges or reduces the command plane so that the reference line coincides with the different reference line, and determines the function on the command plane corresponding to the third coordinate information.

In the coordinate input device, the contact coordinate input unit is a touch panel.

In the coordinate input device, the manipulation reference is determined by a tap manipulation for the touch panel, and the function is determined by a tap manipulation for the touch panel or a long depression manipulation for the touch panel.

In the coordinate input device, the manipulation reference is determined by a trace manipulation having a starting point as a position of the tap manipulation, and the function is determined by a tap manipulation for the touch panel or a long depression manipulation for the touch panel.

The present invention also provides a portable terminal provided with the coordinate input device.

The present invention also provides a coordinate input method, including: detecting a first predetermined manipulation for a contact coordinate input unit, and obtaining coordinate information on the contact coordinate input unit; storing a coordinate and a function in association with each other by a storing unit; generating a manipulation reference on the contact coordinate input unit, on the basis of the coordinate information obtained by the obtaining unit; and determining the function stored by the storing unit in association with the coordinate on the basis of different coordinate information on the contact coordinate input unit that corresponds to a second predetermined manipulation, by performing the second predetermined manipulation for the contact coordinate input unit after the generating unit generates the manipulation reference.

The present invention also provides a coordinate input program for causing a computer to execute: contact coordinate input means; obtaining means for detecting a first predetermined manipulation for the contact coordinate input means, and obtaining coordinate information on the contact coordinate input means; storing means for storing a coordinate and a function in association with each other; generating means for generating a manipulation reference on the contact coordinate input means, on the basis of the coordinate information obtained by the obtaining means; determining means for determining the function stored by the storing means in association with the coordinates on the basis of different coordinate information on the contact coordinate input means that corresponds to a second predetermined manipulation, by performing the second predetermined manipulation for the contact coordinate input means after the generating means generates the manipulation reference.

### Advantageous Effects of Invention

According to a coordinate input device, a coordinate input method, a coordinate input program, and a portable terminal of the present invention, a user can select a function that the user desires by performing a predetermined contact manipulation without distinguishing directions of a device.

### Brief Description of Drawings

FIG. 1 is a block diagram showing the configuration of a coordinate input device 100 according to a first embodiment of the present invention.
In FIG. 2(a) to (c) are schematic views illustrating a correspondence between manipulation for each touch panel and command on a command plane according to the first embodiment of the present invention.
FIG. 3 shows one example of a command plane.
FIG. 4 is a flow chart illustrating an operation of the coordinate input device 100.
FIG. 5 is a block diagram showing the configuration of a coordinate input device 300 according to a second embodiment of the present invention.
FIG. 6 is a flow chart showing an operation of the coordinate input device 300.
In FIG. 7(a) to (c) are schematic views illustrating a correspondence between manipulation for each touch panel and command on a command plane according to the second embodiment of the present invention.
FIG. 8 shows a modification example (1) of a command plane according to the second embodiment of the present invention.
FIG. 9 shows a modification example (2) of a command plane according to the second embodiment of the present invention.
In FIG. 10(a) and (b) are views illustrating a determining method of a coordinate coincidence determining part 310 according to a detailed example (1).
In FIG. 11(a) and (b) are views illustrating a determining method of a coordinate coincidence determining part 310 according to a detailed example (2).
FIG. 12 is a block diagram showing the configuration of a coordinate input device 500 according to a third embodiment of the present invention.
FIG. 13 is a flow chart illustrating an operation of the coordinate input device 500.
FIG. 14 is a block diagram showing the configuration of a coordinate input device 700 according to a fourth embodiment of the present invention.
In FIG. 15(a) to (c) are views illustrating a method of obtaining position information P2 and P3 according to the fourth embodiment.
FIG. 16 is a flow chart illustrating an operation of the coordinate input device 700.

### Modes for Carrying out the Invention

Hereinafter, embodiments of the invention will be described with reference to the accompanying drawings. In each of the embodiments, the following three items are defined as a user's touch panel manipulation.
(1) tapping (touching): an operation that a user's fingers are in contact with an arbitrary position on a touch panel screen during less than a predetermined period of time and then released from the position thereon
(2) tracing: an operation that a user's finger move from any position (starting point) to other position (final point) on a touch panel screen along a predetermined trace whilst being in contact with the touch panel screen.
(3) long pressing (holding): an operation that a user's finger is in contact with an arbitrary position on a touch panel screen during more than a predetermined period of time and then released from the position thereon.

Here, a coordinate input device according to each embodiment of the present invention, while keeping a desired function registered on a command plane, relates a touch panel manipulation position on a touch panel screen and a command plane to each other in response to a touch panel manipulation of first time or two times, and allows functions assigned to a command plane and manipulation for a touch panel to be matched with each other, based on a relative relation between positions of a touch panel manipulation of first time or two times and positions of second or third touch panel manipulation, in response to second or third touch panel manipulation. Accordingly, the coordinate input device according to each embodiment enables manipulation for a touch panel in which directions of an own device or a terminal provided with the own device, or directions of functions become arbitrary.

### (Embodiment 1)

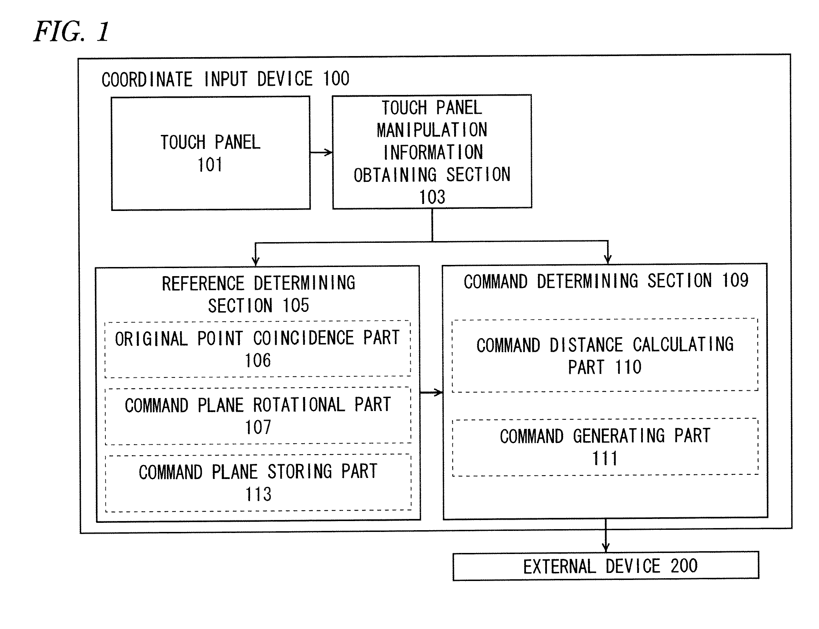

FIG. 1 is a block diagram showing the configuration of a coordinate input device 100 according to a first embodiment of the invention. As shown in FIG. 1, the coordinate input device 100 according to the first embodiment of the invention includes a touch panel 101, a touch panel manipulation information obtaining section 103, a reference determining section 105, and a command determining section 109. The reference determining section 105 has an original point coincidence part 106, a command plane rotational part 107 and a command plane storing part 113. The command determining section 109 has a command distance calculating part 110 and a command generating part 111.

Meanwhile, the coordinate input device 100 according to the first embodiment is connected to an external device 200 that executes a command determined in the command determining section 109. The external device 200 may be integrated with the coordinate input device 100.

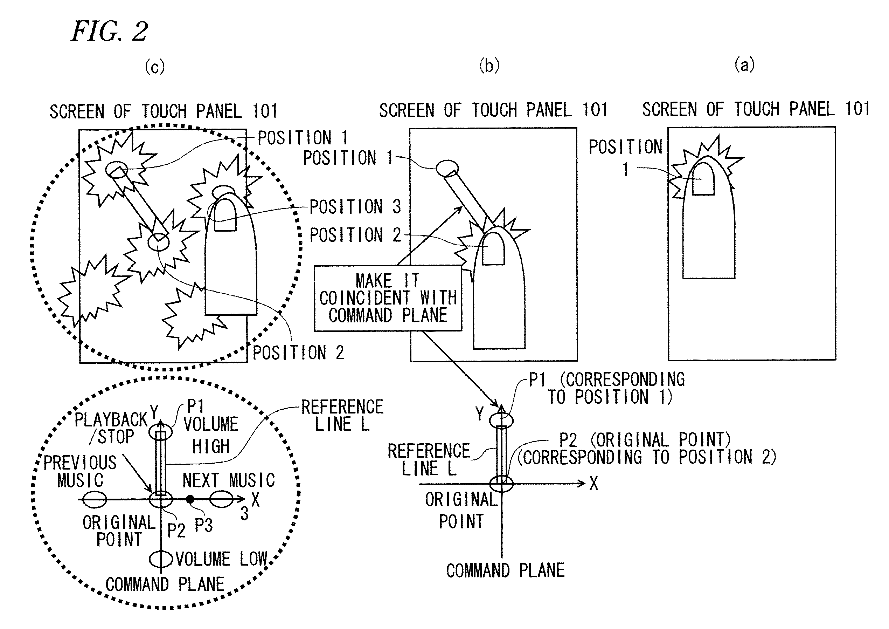

Here, referring to FIGs. 2(a) to (c), in the coordinate input device 100 according to the present embodiment, the basic corresponding relation between a user's manipulation for the touch panel 101 and the command on a command plane that is assigned in response to the manipulation will now be described. Meanwhile, the command plane is held in the command plane storing part 113, and each function of a music player is assigned to a predetermined position or area on the command plane.

As shown in FIG. 2(a), a user taps at a position 1 on the touch panel 101 as a first manipulation for the touch panel. Position information on the command plane that corresponds to a position 1 on a screen of the touch panel 101 is determined as position information P1.

Next, as shown in FIG. 2(b), a user taps at a position 2 on a screen of the touch panel 101 as a second manipulation for the touch panel. At this time, the position information on a command plane corresponding to a position 2 on a screen of the touch panel 101 is determined as position information P2. After the second manipulation for the touch panel, a Y axis of plane orthogonal coordinates as a reference axis directing at position information P1 corresponding to the position 1 on a screen of the touch panel 101 and an X axis crossing at right angles to the reference axis Y and passing through an original point are created on the command plane, while a position corresponding to the position 2 on a screen of the touch panel 101 is determined as the original point (position information P2).

At this time, the Y axis of plane orthogonal coordinates is overlapped on the command plane with a reference line L directing at the position information P1 corresponding to the position 1 on a screen of the touch panel 101 while a position corresponding to the position 2 on the screen of the touch panel 101 is determined as an original point (position information P2).

At this time, a function of a music player is regarded as having already been given along the Y axis and X axis of the reference axis on the command plane. In the current drawing, (1) function of playing back a previous music in a minus range of the X coordinates, (2) function of playing back and stopping a music at the original point, and (3) function of playing back a next music in a plus range of the X axis are assigned to the X axis on the command plane, respectively. Also, in the current drawing, (1) function of turning down the current volume as the Y coordinates move away from the original point in the minus range of the Y axis, (2) function of turning up the current volume as the Y coordinates move away from the original point in the plus range of the Y axis are given to the Y axis on the command plane.

Meanwhile, the reference axis (Y axis in the current drawing) on the command plane may be created by the manipulation of tracing a line on the screen of the touch panel 101 from the position 1 to the position 2 determining an original point of the reference axis on the screen of the touch panel 101.

Next, as shown in FIG. 2(c), a user taps a position 3 on a screen of the touch panel 101 as a third manipulation for the touch panel 101. Incidentally, position information on the command plane corresponding to the position 3 on the screen of the touch panel 101 is determined as position information P3 (0.5, 0). At this time, since the position information P3 corresponding to the position 3 on the screen of the touch panel 101 is positioned on the X axis (plus axis) on the command plane assigned with a function of playing back a next music, a command having a function of playing back the next music is generated on the command plane.

In FIG. 2(c), the position information P3 (coordinate (0.5, 0)) corresponding to the position 3 on the screen of the touch panel 101 is positioned on the X axis (plus side) on the command plane having a function of playing back a next music, but it is not limited to the feature. According to the present embodiment, even in the case where the position information P3 is not positioned on an axis of the command plane, the coordinate input device 100 generates a command having a function on a command plane that is nearest to the position information P3 corresponding to the position 3 on the screen of the touch panel 101. That is, the coordinate input device 100 according to the present embodiment generates a command having a function on the command plane according to the corresponding relation between the reference axis on the command plane and position information P3, and the orthogonal coordinate axis created from the original point.

As described in the foregoing, in the coordinate input device 100 according to the present embodiment, the reference axis and original point on the command plane are determined by the manipulation of two times (e.g., two times of tap manipulation) for the touch panel, and a command may be generated in response to the corresponding relation between the reference axis on the command plane and the orthogonal coordinate axis created from the original point, by a next manipulation (e.g., tap manipulation of one time) for the touch panel.

Also, in the coordinate input device 100 according to the present embodiment, by associating the reference axis and the original point created on a screen of the touch panel 101 with each other without a user for distinguishing the directions of the coordinate input device 100. Accordingly, a user can have each function of an electronic device performed by a manipulation for the touch panel 101 of the coordinate input device 100 without distinguishing the directions of the electronic device such as a mobile phone, etc.

Incidentally, in the present drawing, the X-Y plane of the plane orthogonal coordinate is regarded as a command plane, but it is not limited to this case. For example, the command plane may be created with any other plane coordinates such as polar coordinates, etc. In this case, it may be considered that functions to be assigned to a command plane are assigned in advance along any axis of the plane coordinate.

The touch panel 101 allows a user's manipulation for a touch panel such as (1) tapping (touching), (2) tracing, (3) long pressing (holding), etc. as a user' manipulation for the touch panel described in the foregoing.

The touch panel manipulation information obtaining section 103 may identify the kind and the order of the user's manipulations (1) to (3) as described in the foregoing. Also, the touch panel manipulation information obtaining section 103 obtains position information Pn on the command plane that is assigned corresponding to a position n on a screen of the touch panel 101 on which manipulation for each touch panel has been performed practically. In the present embodiment, the position information Pn is information concerning the plane orthogonal coordinate (X, Y) on the command plane. Also, the n of the position information Pn indicates order of manipulation for a touch panel. The position information Pn obtained in the touch panel manipulation information obtaining section 103 and the kinds (1) to (3) of the touch panel manipulation are output to the reference determining section 105 and the command determining section 109.

The reference determining section 105 is provided with the original point coincidence part 106, the command plane rotational part 107, and the command plane storing part 113.

The original point coincidence part 106 generates the reference line L that is extended from the position 2 to the position 1 on a screen of the touch panel 101, based on the kind of the first touch panel manipulation and the position information P1 thereof, and the kind of the second touch panel manipulation and the position information P2 thereof, and hypothetically determines the position 2 on a screen of the touch panel as an original point of the plane orthogonal coordinates (X, Y). The original point coincidence part 106 outputs to the command plane rotational part 107 the position information P1 and the position information P2 on the plane orthogonal coordinate (X, Y) in respect of the position information P2 that is virtually assigned to the original point of the plane orthogonal coordinate (X, Y) on the command plane.

The command plane rotational part 107 serves to obtain a command plane that is output from the command plane storing part 113, generate command plane rotation information for rotating the coordinate axis X, Y on the command plane based on the vector information on the reference line L and the position information P2 on an original point of the reference line L, and rotate the command plane so that the coordinate axis Y on the command plane may be overlapped with the reference line L. And, the command plane rotational part 107 outputs to the command determining section 109 the command plane rotation information that is obtained based on the kind of the first touch panel manipulation and the position information P1 thereof, and the kind of the second touch panel manipulation and the position information P2 thereof.

The command plane storing part 113 serves to hold the command plane. Also, for example, each function of a music player is assigned to a predetermined position or a predetermined area on the command plane.

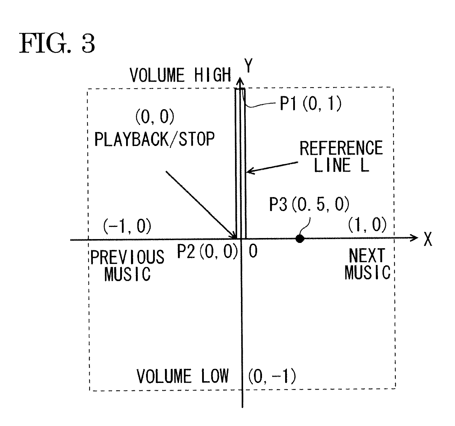

FIG. 3 shows an example of a command plane. The command plane shown in FIG. 3 is identical to the command plane shown in FIGs. 2(a) to (c). That is, commands corresponding to various functions of playing back music are assigned to each axis of a command plane.

As shown in FIG. 3, in the first and second quadrant sides, the function of turning up the volume as the Y coordinate value increases gradually from the original point is assigned to the Y axis on a command plane that coincides witch the reference line L. In the third and fourth quadrant sides, the function of turning down the volume as the Y coordinate value decreases from the original point is assigned to the Y axis. The reference line L is a line that is extended from the position information P2 (0, 0) to the position information P1 (0, 1). Meanwhile, playback/stop functions are assigned to the original point (0, 0) on a command plane corresponding to the position information P2.

Along the X axis on the command plane that crosses at right angles to the reference line L (Y axis on the command plane), a command corresponding to a function of playing back a following music is assigned to the predetermined coordinate (1, 0) of the first and fourth quadrants, and a command corresponding to a function of playing back a previous music is assigned to a predetermined coordinate (-1, 0) of the second and third quadrants.
Meanwhile, in the example described referring to FIGs. 2(a) to (c), the position information P3 (0.5, 0) corresponds to a command corresponding to a function of playing back a following music, which is assigned to the coordinate (1, 0).

The command determining section 109 is provided with a command distance calculating part 110 and a command generating part 111. The command determining section 109 finds a command on a command plane that corresponds to the position information P3 concerning a user's third manipulation for a touch panel, based on the command plane rotation information, the kind of a user's third manipulation for the touch panel, and the position information P3 thereof, and then generates it.

The command distance calculating part 110 finds the distance from the position information P3 corresponding to the position P3 of the user's third manipulation for the touch panel to the coordinate axis X, Y on the command plane, based on the command plane rotation information that has been output from the command plane rotation part 107, thereby obtaining a coordinate axis on a command plane near to the position information P3.

The command generating part 111 judges a command on a coordinate axis of the command plane that is nearest to the position information P3 as a desired manipulation at the time point of the user's third manipulation for the touch panel, thereby generating the command. Also, the command generating part 11 outputs the generated command to the external device 200 executing the command.

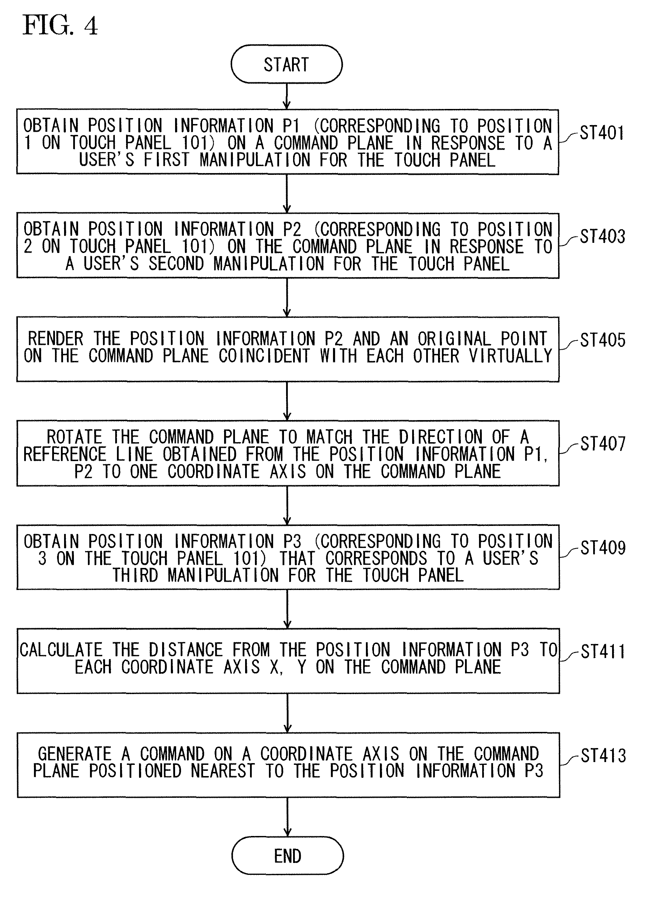

Next, an operation of the coordinate input device 100 according to the present embodiment will now be described with reference to FIG. 4. FIG. 4 is a flow chart showing the operation of the coordinate input device 100.

In step ST401, the touch panel manipulation information obtaining section 103 obtains from the touch panel 101 the position information P1 on the command plane corresponding to the position 1 on the touch panel 101 screen, by the user's first manipulation for the touch panel. And, it is followed by step ST403.

In step ST403, the touch panel manipulation information obtaining section 103 obtains from the touch panel 101 the position information P2 on the command plane corresponding to the position 2 on the touch panel 101 screen, through the user's second manipulation for the touch panel. And, it is followed by step ST405.

In step ST405, the original point coincidence part 106 renders the position information P2 and the original point on the command plane coincident with each other virtually. And, it is followed by step ST407.

In step ST407, the command plane rotation part 107 rotates the command plane to match a direction of the reference line that is obtained based on the position information P1, P2 to one coordinate axis on the command plane. And, it is followed by step ST409.

In step ST409, the touch panel manipulation information obtaining section 103 obtains from the touch panel 101 the position information P3 on the command plane corresponding to the position 3 on the touch panel 101 screen, in response to the user's third manipulation for the touch panel. And, it is followed by step ST411.

In step ST411, the command distance calculating part 110 estimates the distance from the position information P3 to each of the coordinate axis X, Y on the command plane. And, it is followed by step ST413.

In step ST413, the command generating part 111 generates a command on a coordinate axis on a command plane that is positioned nearest to the position information P3. And, the processes end.

As described in the foregoing, the coordinate input device 100 according to the present embodiment, while keeping a desired function registered on a command plane, relates a screen of a touch panel 101 and a command plane to each other in response to the touch panel manipulation of one time or two times, and allows a function on a command plane and manipulation for a touch panel to be matched with each other, based on a relative relation between positions of the touch panel manipulation of one time or two times and positions of second or third touch panel manipulation, in response to second or third touch panel manipulation. Accordingly, the coordinate input device 100 according to the present embodiment enables manipulation for a touch panel in which directions of an own device or a terminal provided with the own device, or directions of functions become arbitrary.

Meanwhile, according to the present embodiment, in a case of canceling the generation of a command through a touch panel manipulation, for example, (1) tap at a same position on a screen of touch panel 101 consecutively three times, or (2) long press (hold) a same position on a screen of touch panel 101. When the generation of command is cancelled, the coordinate input device 100, (1) is returned to just before the state, or (2) stops the operation.

### (Embodiment 2)

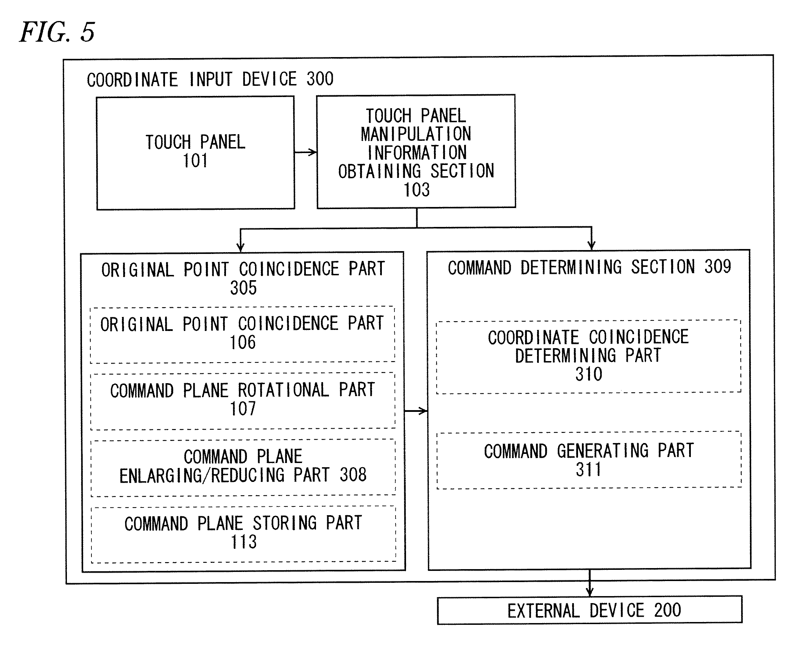

FIG. 5 is a block diagram showing the configuration of a coordinate input device 300 according to a second embodiment. The coordinate input device 300 according to the second embodiment is different from the coordinate input device 100 according to the first embodiment in (1) enlarging or reducing a command plane to make the length of a reference line on a command plane coincident with the distance between the position information P1, P2, and (2) comparing a coordinate of a command on a command plane after conversion with the position information P3 to thereby determine the command. Except for the above difference, the device is identical to that in the first embodiment. In FIG. 2, like elements in common with FIG. 1 refer to like reference numerals.

As shown in FIG. 5, the coordinate input device 300 according to the second embodiment includes a touch panel 101, a touch panel manipulation information obtaining section 103, a reference unification section 305, and a command determining section 309. The reference unification section 305 has an original point coincidence part 106, a command plane enlarging/reducing part 308 and a command plane storing part 113. The command determining section 109 has a coordinate coincidence determining part 310 and a command generating part 311.

Incidentally, the coordinate input device 300 according to the second embodiment is connected to an external device 200 that executes a command determined in the command determining section 309. The external device 200 may be integrated with the coordinate input device 300.

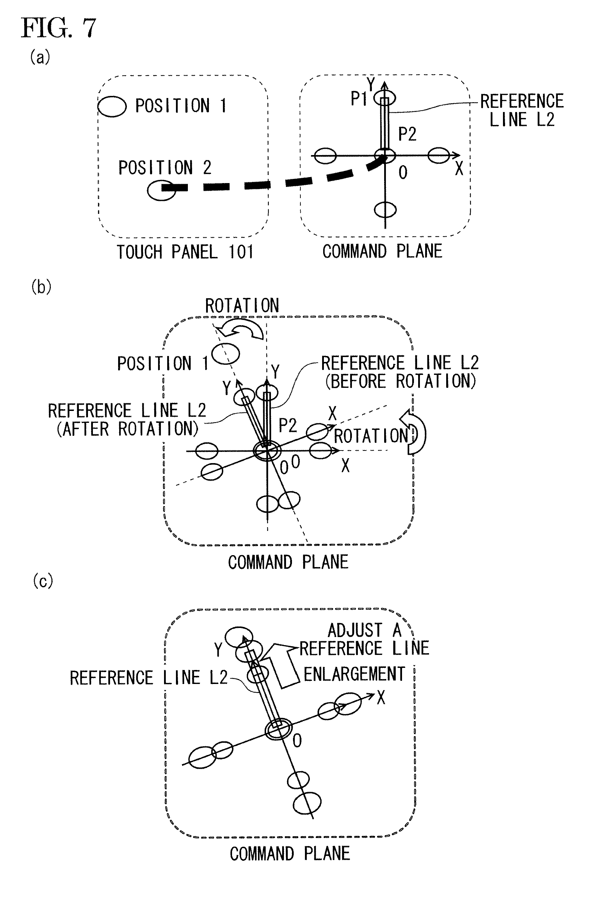

Here, referring to FIGs. 7(a) to (c), in the coordinate input device 300 according to the present embodiment, the basic corresponding relation between a user's manipulation for the touch panel 101 and the command on a command plane that is assigned in response to the manipulation will now be described. The command plane of the coordinate input device 300 according to the second embodiment is the same command plane as in the first embodiment (see FIG. 3). The command plane is held in the command plane storing part 113, and each function of music players is assigned to a predetermined position or area on the command plane.

As shown in FIG. 7(a), a user taps a position I on a screen of the touch panel 101 as a first manipulation for the touch panel. Position information on the command plane that corresponds to the position 1 on a screen of the touch panel 101 is determined as position information P1. Likewise, the user tabs at a position 2 on a screen of the touch panel 101 as a second manipulation for the touch panel. Position information on the command plane that corresponds to the position 2 is determined as position information P2

According to the present embodiment, a Y axis of plane orthogonal coordinate and an X axis crossing at right angles to the reference axis Y and passing through an original point have been created in advance on the command plane. Also, the distance of a reference line L2 on the reference axis Y has been determined in advance on the command plane.

And, the original point 0 on the command plane is made to be coincident with the position information P2.

Next, as shown in FIG. 7(b), the command plane is rotated by a predetermined angle so that the direction of the reference line L2 on the command plane may be coincident with the direction of a line defined by the position information P2, P1 corresponding to the positions 1, 2.

As shown in FIG. 7(c), the whole command plane is enlarged so that the length of the reference line L2 on the command plane may be coincident with the length of a line defined by the position information P2, P1.

As shown in the foregoing, according to the present embodiment, by associating the position information P1, P2 and the touch panel manipulation position 1, 2 with each other, a user may perform manipulation for a touch panel without distinguishing the directions of the coordinate input device 300. Also, the coordinate input device 300 determines a reference axis and an original point on a command plane through a user's two-time manipulation (e.g., two-time tap manipulation) for a touch panel, and generates a command based on a corresponding relationship between a reference axis on a command plane and a orthogonal coordinate axis created from an original point through a following manipulation (e.g., tap) for a touch panel.

Incidentally, in the example described referring to FIG. 7(a) to (c), the case where the whole command plane is enlarged has been described. However, in a case where the reference line L2 on the command plane is longer than the line defined by the position information P2, P1 corresponding to the position 1, 2, it is possible to reduce the whole command plane so as to be coincident with the length of the line defined by the position information P2, P1.

The touch panel 101 allows a user's manipulation for a touch panel such as (1) tapping (touching), (2) tracing, (3) long pressing (holding), etc. as a user' manipulation for the touch panel described in the foregoing.

The touch panel manipulation information obtaining section 103 may identify the kind and the order of the user's manipulations (1) to (3) as described in the foregoing. Also, the touch panel manipulation information obtaining section 103 obtains position information Pn on the command plane that is assigned corresponding to a position n on a screen of the touch panel 101 on which manipulation for each touch panel has been performed practically. In the present embodiment, the position information Pn is information concerning the plane orthogonal coordinate (X, Y) on the command plane. Also, the n of the position information Pn indicates order of manipulation for a touch panel. The position information Pn obtained in the touch panel manipulation information obtaining section 103 and the kinds (1) to (3) of manipulation for the touch panel are output to the reference determining section 305 and the command determining section 309.

The reference determining section 305 is provided with the original point coincidence part 106, the command plane rotational part 107, the command plane enlarging/reducing part 308, and the command plane storing part 113.

The original point coincidence part 106 generates the reference line L3 that is extended from the position 2 to the position 1 on a screen of the touch panel 101, based on the kind of the first touch panel manipulation and the position information P1 thereof, and the kind of the second touch panel manipulation and the position information P2 thereof, and virtually determines the position 2 on a screen of the touch panel 101 as an original point of the plane orthogonal coordinate (X, Y) on a command plane. The original point coincidence part 106 outputs to the command plane rotational part 107 the position information P1 and the position information P2 on the plane orthogonal coordinate (X, Y) in respect of the position information P2 that is assigned to the original point of the plane orthogonal coordinate (X, Y) on the command plane including vector information concerning the reference line L3.

The command plane rotational part 107 serves to obtain a command plane that is output from the command plane storing part 113, generate command plane rotation information for rotating the command plane so that the reference line L2 on the coordinate axis Y on the command plane may be overlapped with the reference line L3, based on vector information on the reference line L2 defined on the Y axis of the command plane and vector information on the reference line L3. The command plane rotation information is output to the command plane enlarging /reducing part 308 and the command determining section 309.

And, the command plane rotational part 107 serves to rotate the command plane so that the reference line L2 on the coordinate axis Y on the command plane may be overlapped with the reference line L3, based on the command plane rotation information.

The command plane enlarging/reducing part 308 serves to enlarge or reduce the command plane so that the length of the reference line L2 may be coincident with the length of the reference line L3 defined by the position information P1, P2 on the command plane rotated. Meanwhile, in case where the reference lines L3 and L2 are identical in its length to each other, the command plane enlarging/reducing part 308 does not enlarge nor reduce the command plane.

The command determining section 309 has the coordinate coincidence determining part 310 and the command generating part 311.

The command plane storing part 113 serves to hold the command plane. Also, each function of music players, for example, has been assigned to a predetermined position or any area on the command plane.

The coordinate coincidence determining part 310 estimates the distance from the position information P3 of a user's third manipulation for a touch panel to the coordinate axis X, Y on the command plane, based on the command plane rotation information output from the command plane rotational part 107, and obtains a coordinate axis on the command plane that is nearer to the position information P3. Hereinafter, a detained example of a determining method of the coordinate coincidence determining part 310 will be explained.

### (Determining method in case where the length of reference line is short)

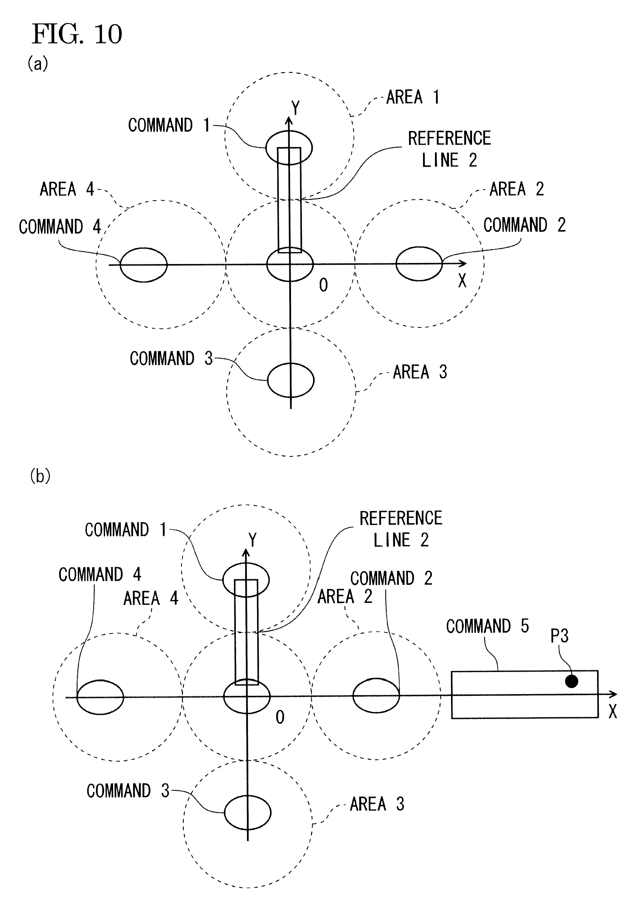

A detailed example (1) of a determining method of the coordinate coincidence determining part 310 will now be explained with reference to FIG. 10. FIG. 10(a) and FIG. 10(b) are views illustrating a determining method of the coordinate coincidence determining part 310 according to the detailed example (1).

In case where the reference line L2 created based on the user's second manipulation (e.g., two times tap) for touch panel is short, the coordinate coincidence determining part 310 judges at which area the position information P3 of the user's third manipulation for a touch panel is positioned and determines the command positioned at a center of the area as the function corresponding to the user's third manipulation for a touch panel. In the case of the command plane shown in FIG. 10(a), the commands 1 to 4 correspond to the area 1 to area 4 indicated by a dashed line, respectively.

Also, as shown in FIG. 10(b), in case where the position information P3 of the user's third manipulation for a touch panel is positioned apart from the original point on the command plane to thereby get out off each of the areas 1 to 4, the coordinate coincidence determining part 310 may judge so as to assign in advance a corresponding function to other command 5 that is not defined on the command plane.

### (Determining method in case where a reference line is long in its length)

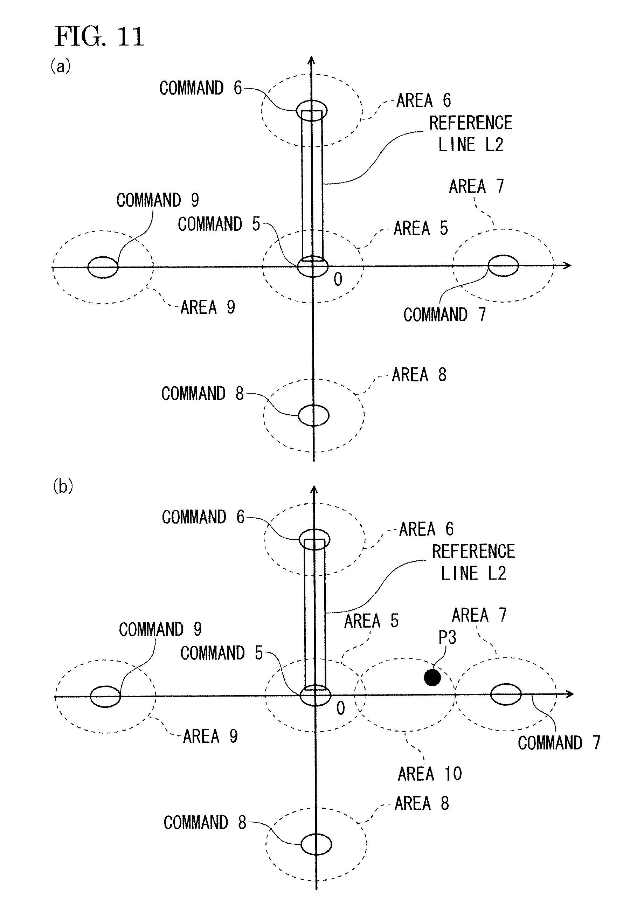

A detailed example (2) of a determining method of the coordinate coincidence determining part 310 will now be explained with reference to FIG. 11. FIG. 11(a) and FIG. 11(b) are views illustrating a determining method of the coordinate coincidence determining part 310 according to the detailed example (1).

In case where the reference line L2 created based on the user's second manipulation (e.g., two-time tap) for a touch panel is long, the coordinate coincidence determining part 310 judges at which area the position information P3 of the user's third manipulation for a touch panel is positioned and determines the command positioned at a center of the area as the function corresponding to the user's third manipulation for a touch panel. In the case of the command plane shown in FIG. 11(a), the commands 5 to 9 correspond to the area 5 to area 9 indicated by a dashed line, respectively.

Also, as shown in FIG. 11(b), in case where the position information P3 of the user's third manipulation for a touch panel gets out off each of the areas 5 to 9 to be positioned at any area 10 in the middle between the area 5 and the area 7, the coordinate coincidence determining part 310 may judge so as to assign in advance a corresponding function to other command that is not defined on the command plane.

The command generating part 311 determines the command on a coordinate axis on a command plane that is nearest to the position information P3 as a desired manipulation of the user's third manipulation for a touch panel to thereby generate the command. Also, the command generating part 111 outputs the generated command to the external device 200 performing the command.

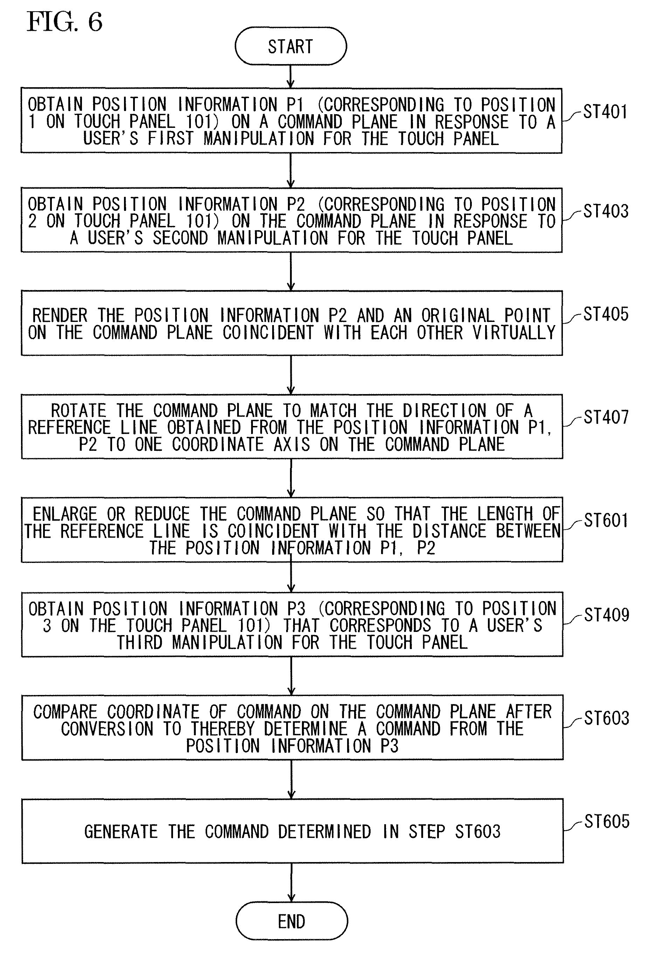

Next, an operation of the coordinate input device 300 according to the present embodiment will now be described with reference to FIG. 6. FIG. 6 is a flow chart showing the operation of the coordinate input device 300 according to the present embodiment. Incidentally, like reference numerals refer to like steps as shown in the flow chart of FIG. 4.

In step ST401, the touch panel manipulation information obtaining section 103 obtains from the touch panel 101 the position information P1 on the command plane corresponding to the position 1 on the touch panel 101, in response the user's first manipulation for the touch panel. And, it is followed by step ST403.

In step ST403, the touch panel manipulation information obtaining section 103 obtains from the touch panel 101 the position information P2 on the command plane corresponding to the position 2 on the touch panel 101, through the user's second manipulation for the touch panel. And, it is followed by step ST405.

In step ST405, the original point coincidence part 106 renders the position information P2 and the original point on the command plane coincident with each other virtually. And, it is followed by step ST407.

In step ST407, the command plane rotation part 107 rotates the command plane to match a direction of the reference line that is obtained based on the position information P1, P2 to one coordinate axis on the command plane. And, it is followed by step ST601.

In step ST601, the command plane enlarging/reducing part 308 enlarges or reduces the command plane so that the length of the reference line may be coincident with the distance between the position information P1, P2. And, it is followed by step ST409.

In step ST409, the touch panel manipulation information obtaining section 103 obtains from the touch panel 101 the position information P3 on the command plane corresponding to the position 3 on the touch panel 101 screen, in response to the user's third manipulation for the touch panel. And, it is followed by step ST603.

In step ST603, the coordinate coincidence determining part 310 compares coordinates of command on the command plane after to thereby determine a command from the position information P3.

In step ST605, the command generating part 311 generates the command determined in step ST603. And, the processes end.

As described in the foregoing, according to the present embodiment, the command plane and the position information P1, P2 of the manipulation for a touch panel are matched to each other, and thereby a user can perform a touch panel manipulation without bothering with the direction of the coordinate input device 300. Also, the coordinate input device 300 determines a reference axis and an original point on a command plane through a user's two-time manipulation (e.g., tap) for a touch panel, and generates a command based on a corresponding relationship between a reference axis on a command plane and a orthogonal coordinate axis created from an original point through a following manipulation (e.g., tap) for a touch panel.

### (Modification 1 of command plane)

According to the present embodiment, although the command plane is regarded as being identical to the command plane shown in FIG. 3, it is not limited to such embodiment. A command concerning a music playback function may be assigned to each axis positioned, at an outer side of the range of the command plane indicated by dashed line, i.e., at an outer side of the square surrounded by the position information (1, 1), (1, -1), (-1, -1), and (-1, 1).

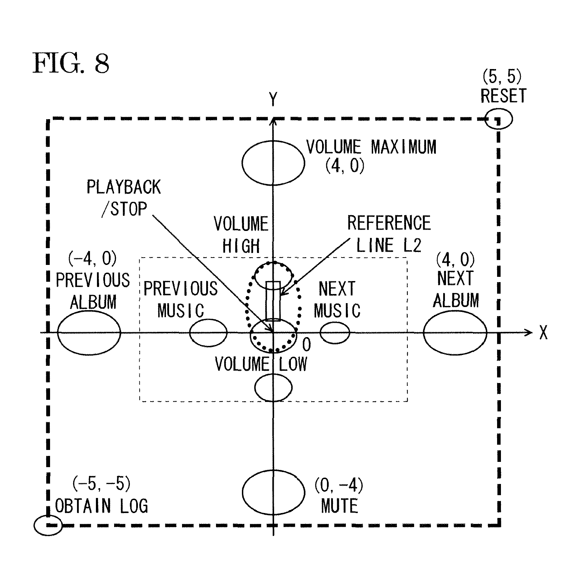

FIG. 8 shows a command plane according to the modification 1. The command plane, as shown in FIG. 8, is defined as a command plane after the command plane enlarging/reducing part 308 enlarges or reduces the command plane in step ST601 so that the length of the reference line on the command plane may be coincident with the distance between the position information P1 and P2.

Particularly, in case where the length of the reference line L2 defined by the position information P1, P2 that is obtained by a user's one time or two-time manipulation for a touch panel is short, many commands may additionally be assigned. Accordingly, a user can select many functions without bothering with the directions of the coordinate input device 300.

As shown in FIG. 8, a command concerning a music playback function may be assigned to each axis positioned, at an outer side of the range of the command plane indicated by dashed line, i.e., at an outer side of the square surrounded by the position information (1, 1), (1, -1), (-1, -1), and (-1, 1).

In detail, on the command plane shown in FIG. 8, the position information (4, 0) may be assigned a function of moving to a next album, the position information (-4, 0) may be assigned a function of moving to a previous album, the position information (0, 4) may be assigned a function of maximizing the volume, the position information (0, -4) is may be assigned a mute function, the position information (5, 5) may be assigned a reset function, and the position information (-5, -5) may be assigned a log obtaining function.

### (Modification 2 of command plane)

According to the present embodiment, although the command plane is regarded as being identical to the command plane shown in FIG. 3, it is not limited to such embodiment. Particularly, in case where the length of the reference line L2 defined by the position information P1, P2 obtained by a user's two-time manipulation for a touch panel is longer than the reference line L3 on the command plane, A command corresponding to a function concerning a music playback function may be assigned to each axis positioned at an outer side of the square surrounded by the position information (1, 1), (1, -1), (-1, -1), and (-1, 1).

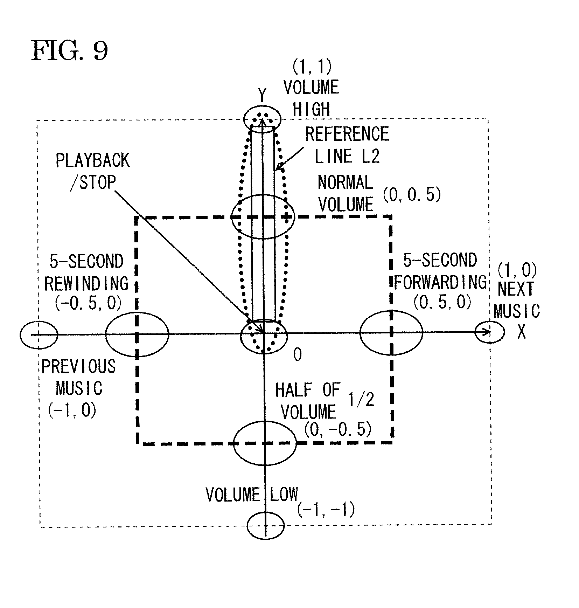

FIG. 9 shows a command plane according to the modification 1. The command plane, as shown in FIG. 9, is defined as a command plane after the command plane enlarging/reducing part 308 enlarges or reduces the command plane shown in FIG. 3 in step ST601 so that the length of the reference line on the command plane may be coincident with the distance between the position information P1 and P2.

Incidentally, on the command plane shown in FIG. 9, like the command plane indicated in FIG. 3, the position information (0, 0) may be assigned a command corresponding to a playback/stop function, the position information (1, 0) may be assigned a command corresponding to a next music playback function, the position information (-1, 0) may be assigned a command corresponding to a previous music playback function, the position information (0, 1) may be assigned a command corresponding to a function of turning up the volume, the position information (0, -1) may be assigned a command corresponding to a function of reducing the volume.

In addition, on the command plane shown in FIG. 9, the position information (0.5, 0) may be assigned a command corresponding to a 5-second forward function, the position information (-0.5, 0) may be assigned a command corresponding to a 5-second rewinding function, the position information (0, 0.5) may be assigned a command corresponding to a normal volume setting function, and the position information (0, -0.5) may be assigned a command corresponding to a function of turning down the current volume to half of the current volume.

As described in the foregoing, even in case where the length of the reference line L2 defined by the position information P1, P2 that is obtained by a user's two-time manipulation for a touch panel is longer than the reference line L3 on the command plane, many commands may additionally be assigned. Accordingly, a user can select many more functions without bothering with the directions of the coordinate input device 300.

Also, the coordinate input device 300 according to the present embodiment, while keeping a desired function registered on a command plane, relates a screen of the touch panel 100 and a command plane to each other in response to two-time manipulation for the touch panel, and allows functions on a command plane and manipulation for a touch panel to be matched with each other, based on the relative relation between positions of two-time manipulation for a touch panel and positions of third manipulation for a touch panel, in response to third manipulation for the touch panel. Accordingly, the coordinate input device 300 according to the present embodiment enables manipulation for a touch panel in which directions of an own device or a terminal provided with the own device, or directions of functions become arbitrary.

Meanwhile, according to the present embodiment, in the case of canceling the generation of command through manipulation for a touch panel, for example, (1) tapping three times at a same position on the screen of the touch panel 101, or (2) long pressing (holding) a same position on a screen of touch panel 101. When the generation of command is cancelled, the coordinate input device 300, (1) is returned to just before the state, or (2) stops the operation.

### (Embodiment 3)

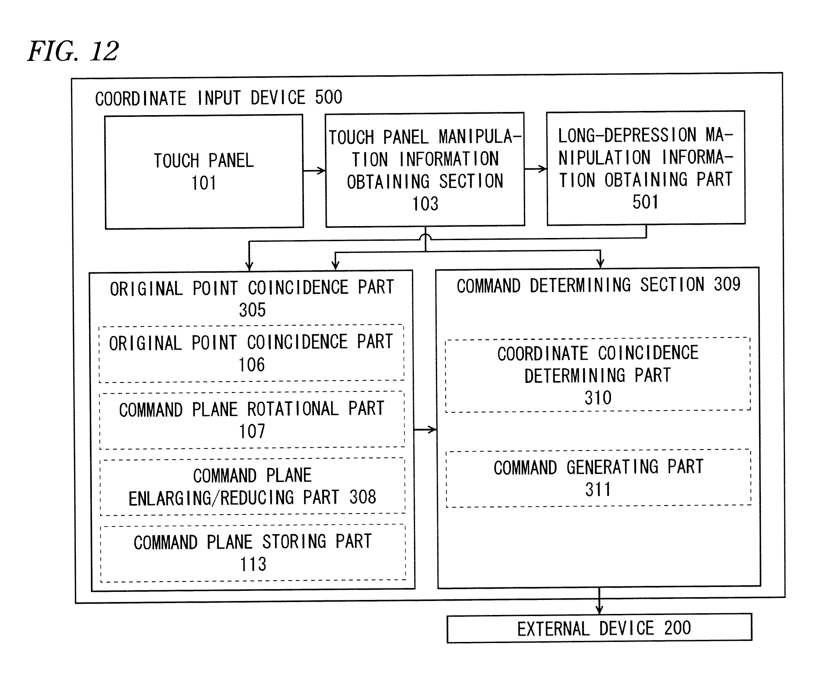

FIG. 12 is a block diagram showing the configuration of a coordinate input device 500 according to a third embodiment. The coordinate input device 500 according to the third embodiment is different from the coordinate input device 300 according to the second embodiment in that the coordinate input device 500 is provided with the long-depression manipulation information obtaining part 501. Except the above difference, the coordinate input device 500 is identical to that in the second embodiment. In FIG. 12, like elements which are in common with FIG. 5 are designated as like reference numerals. Detailed explanations of elements in common with the second embodiment will be omitted.

According to the present embodiment, the long-depression manipulation information obtaining part 501 identifies a long-depression manipulation as a user's second manipulation for a touch panel and obtains as the position information P2 a position where the user's fingers have been released from the touch panel after the long depression manipulation ends. Accordingly, since variation in a user's manipulation for a touch panel increases, which correspond to the reference line L2 created based on the position information P1 and P2, the operability of the coordinate input device 500 may be improved. According to the present embodiment, a user's first manipulation for a touch panel is performed by tapping at the position 1 on a screen of the touch panel 101, like the first and second embodiments.

As shown in FIG. 12, the coordinate input device 500 includes a touch panel 101, a touch panel manipulation information obtaining section 103, a long-depression manipulation information-obtaining part 501, a reference unification section 305, and a command determining section 309. The reference unification section 305 has an original point coincidence part 106, a command plane rotational part 107, a command plane enlarging/reducing part 308 and a command plane storing part 113. The command determining section 109 has a coordinate coincidence determining part 310 and a command generating part 311.

Meanwhile, the coordinate input device 500 according to the third embodiment is connected to an external device 200 that executes a command determined in the command determining section 309. The external device 200 may be integrated with the coordinate input device 500.

The position information Pn obtained in the touch panel manipulation information obtaining part 103 and the kinds (1) to (3) of the manipulations for the touch panel are output to the reference unification section 305, the command determining part 309, and the long depression manipulation information obtaining part 501.

After obtaining the position information P1 from the touch panel manipulation information obtaining section 103, the long-depression manipulation information obtaining part 501 identifies the long depression manipulation as the kind of a user's second manipulation for a touch panel, and obtains the position information P2 at the position where the user's fingers are released from the touch panel after the long depression manipulation ends. And, the position information P2 and the kind of the touch panel manipulation (long-depression manipulation) are output to the reference unification section 305.

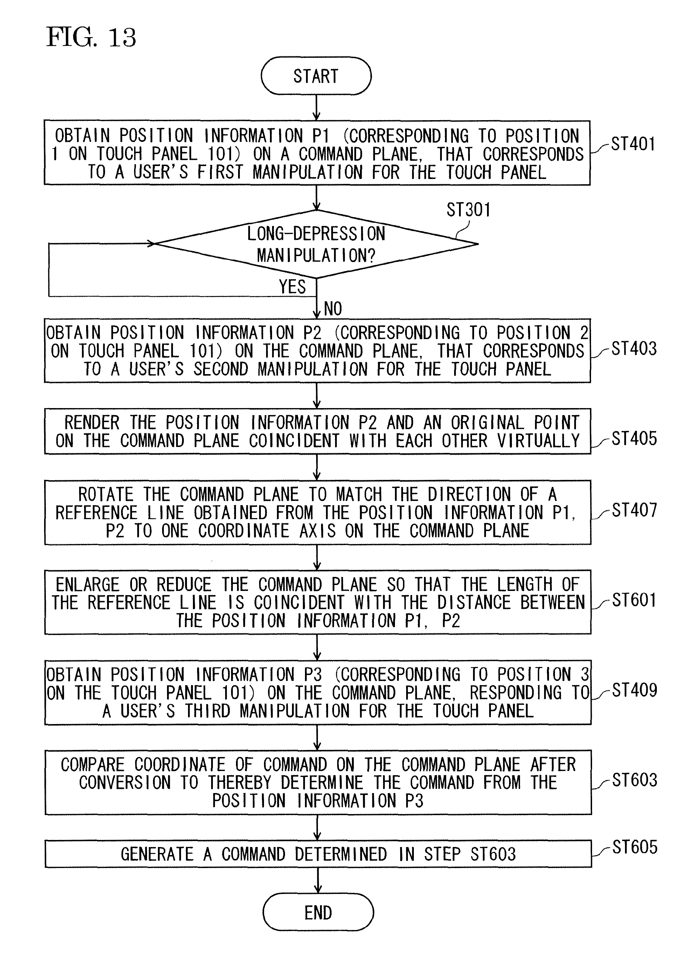

An operation flow of the coordinate input device 500 shown in FIG. 12 will be explained with reference to FIG. 13. FIG. 13 shows the operation flow of the coordinate input device 500. Among the operation flow shown in FIG. 13, steps ST overlapped with the operation flow shown in FIG. 6 are designated by the same reference symbols, and the detailed explanation thereof is omitted.

As shown in FIG. 13, in step ST301, after obtaining the position information P1, the long-depression manipulation information obtaining part 501 determines whether the user's second manipulation for a touch panel is the long-depression manipulation or not. The step ST301 is repeated until the long-depression manipulation ends (No).

As described above, according to the present embodiment, the long-depression manipulation information obtaining part 501 identifies a long depression manipulation as the kind of a user's second manipulation for a touch panel and obtains the position information P2 at the position where the user's fingers are released from the touch panel after the long depression manipulation ends. Accordingly, even in case where a user intends to draw the reference line L2 by one stroke, the reference line L2 may be created. Accordingly, variation in a user's manipulation for a touch panel, which corresponds to the reference line L2 that is created based on the position information P1, P2 corresponding to the positions 1, 2, increases, thereby improving the operability of the coordinate input device 300.

Incidentally, in the present embodiment, although the long-depression manipulation information obtaining part 501 identifies the long depression manipulation as the kind of a user's second manipulation for a touch panel and obtains the position information P2 at the position where the user's fingers are released from the touch panel after the long depression manipulation ends, the present invention is not limited to such embodiment. Information of the long-depression manipulation information obtaining part 501 may be output to the command determining section 309 so that the long-depression manipulation information obtaining part 501 may identify the long depression manipulation as the kind of a user's third manipulation for a touch panel and generate a command simultaneously with the end of the long depression manipulation. The kind of a user's third manipulation for a touch panel may thereby increase, and the operability of the coordinate input device 500 is improved accordingly.

Also, the coordinate input device 500 according to the present embodiment, while keeping a desired function registered on a command plane, relates a screen of a touch panel 101 and a command plane to each other in response to two-time touch panel manipulation, and allows functions on a command plane and manipulation for a touch panel to be matched with each other, based on a relative relation between positions of two-time touch panel manipulation and positions of third touch panel manipulation, in response to third touch panel manipulation. Accordingly, the coordinate input device 500 according to each embodiment enables manipulation for a touch panel in which directions of an own device or a terminal provided with the own device, or directions of functions become arbitrary.

Meanwhile, according to the present embodiment, in case of canceling generation of a command by a touch panel manipulation, for example, (1) tapping at a same position on a screen of touch panel 101 consecutively three times, or (2) long pressing (holding) a same position on a screen of touch panel 10 1. When the generation of command is cancelled, the coordinate input device 500, (1) is returned to just before the state, or (2) stops the operation.

### (Embodiment 4)

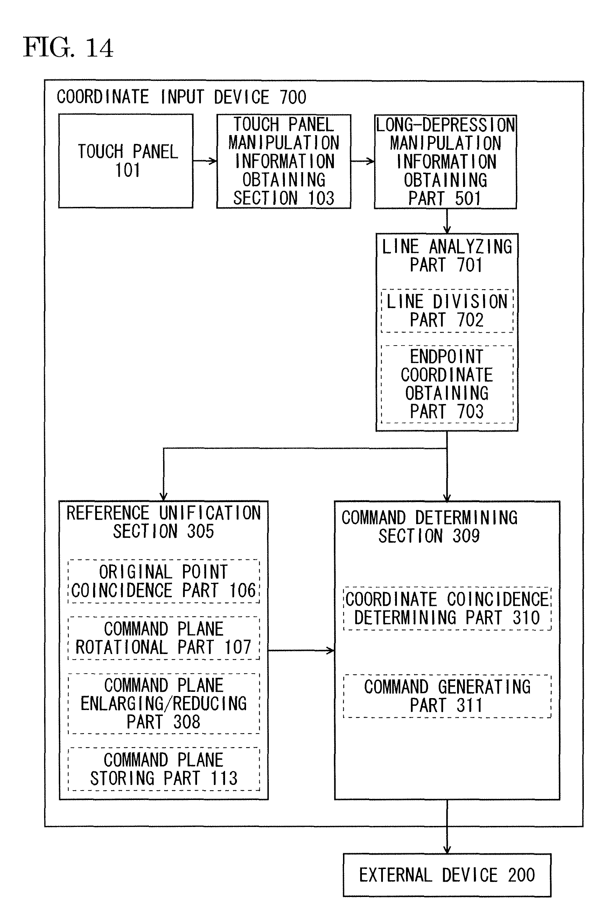

FIG. 14 is a block diagram showing the configuration of a coordinate input device 700 according to a fourth embodiment. The coordinate input device 700 according to the fourth embodiment is different from the coordinate input device 500 according to the third embodiment in that the coordinate input device 700 is provided with a line analyzing part 701. Except the above difference, the coordinate input device 700 is identical to that in the third embodiment. In FIG. 14, like elements in common with FIG. 12 are designated as like reference numerals. Detailed explanations of elements in common with the third embodiment will be omitted.

The coordinate input device 700 shown in FIG. 14 includes a touch panel 101, a touch panel manipulation information obtaining section 103, a long-depression manipulation information-obtaining part 501, a line analyzing part 701, a reference unification section 305, and a command determining section 309.

The line analyzing part 701 has a line division part 702 and an endpoint coordinate obtaining part 703. The reference unification section 305 has an original point coincidence part 106, a command plane rotational part 107, a command plane enlarging/reducing part 308 and a command plane storing part 113. The command determining section 109 has a coordinate coincidence determining part 310 and a command generating part 311.

Incidentally, the coordinate input device 700 according to the fourth embodiment is connected to an external device 200 that executes a command determined in the command determining section 309. The external device 200 may be integrated with the coordinate input device 700.

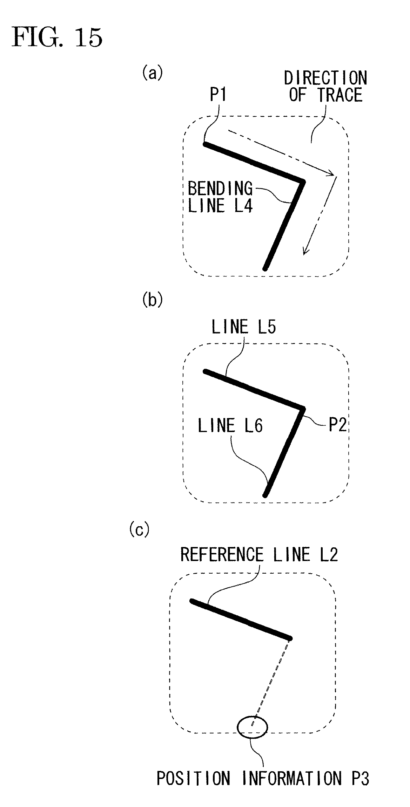

Hereinafter, a method of obtaining the position information P2, P3 will be described with reference to FIGs. 15(a) to (c). In the present embodiment, even in case where a user performs a "trace" manipulation for touch panel to draw a bending line L4 from the position information P1 as a starting point, the user may obtain the position information P2, P3 as well as the position information P1. In detail, as shown in FIG. 15(b), the bending line L4 is divided into two lines L5, L6, and then the endpoint of the line L5 including the position information P1 is obtained as the position information P2. Also, as shown in FIG. 15(c), the endpoint of the line L6 is obtained as the position information P3.

Next, the configuration of the line analyzing part 701 will be described. The line analyzing part 701 is provided with the line division part 702 and the endpoint coordinate obtaining part 703.

The line analyzing part 701 obtains vector information on the bending line L4 having the position information P1 as a starting point, based on the position information where a user's fingers are released from the touch panel after the long depression manipulation taken by the long depression manipulation information obtaining part 501 (see FIG. 15(a)).

And, the line division part 702 interprets the bending line L4 as consisting of two lines L5 and L6, based on the vector information on the bending line L4. The line division part 702 determines as the position information P2 the endpoint of the line L5 including the position information P1 as a starting point (see FIG. 15(b)), and judges the line L5 as the reference line L2.

The endpoint coordinate obtaining part 703 obtains as the position information P3 an endpoint different from the endpoint of L5 among the endpoints of the line L6, based on the information (vector information on lines L5, L6 and position information P2) obtained in the line division part 702 (see FIG. 15(c)).

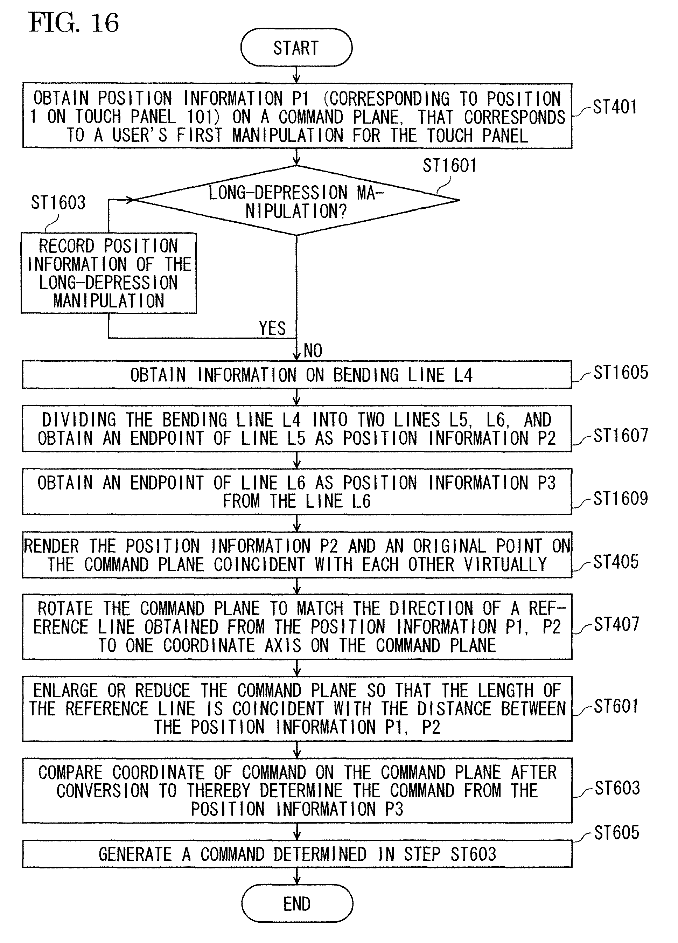

Next, an operation flow of the coordinate input device 700 will be explained with reference to FIG. 16. FIG. 16 shows the operation flow of the coordinate input device 700. Among the operation flow shown in FIG. 16, steps ST overlapped with the operation flow shown in FIGs. 6 and 13 are designated by the same reference symbols, and the detailed explanation thereof is omitted.

As shown in FIG. 16, in step ST1601, after obtaining the position information P1, the long-depression manipulation information obtaining part 501 determines whether the user's second manipulation for a touch panel is the long-depression manipulation or not. If it is judged as the long depression manipulation (Yes), the position information corresponding to the long depression manipulation is recorded in step ST1603, and then the process is returned to step ST1601. If it is judged the long depression manipulation ends (No), it is followed by step ST1605.

In step ST1605, the vector information on the bending line L4 is obtained. Then, it is followed by step ST1607.

In step ST1607, the bending line L4 is divided into two lines L5, L6, the endpoint of the line L5 including the position information P1 as a starting point is determined as the position information P2 (see FIG. 15(b), and the line L5 is determined as the reference line L2. And, it is followed by step ST1609.

In step ST1609, the endpoint of the line L6 is obtained as the position information P3 from the line L6.

As described above, the coordinate input device 700 according to the present embodiment obtains the reference line L2 and the position information P3 based on the position information P1, P2 when a user performing a trace on the touch panel 101 after tapping at the touch panel. Accordingly, variation in a user's manipulation for a touch panel increases, thereby improving the operability of the coordinate input device 700.

Also, the coordinate input device 700 according to the present embodiment, while keeping a desired function registered on a command plane, relates a screen of a touch panel 101 and a command plane to each other in response to one-time touch panel manipulation (trace manipulation), and allows functions on a command plane and manipulation for a touch panel to be matched with each other, based on a relative relation between positions of first touch panel manipulation and positions of second touch panel manipulation, in response to second touch panel manipulation (trace manipulation). Accordingly, the coordinate input device 700 according to each embodiment enables manipulation for a touch panel in which directions of an own device or a terminal provided with the own device, or directions of functions become arbitrary.

Meanwhile, according to the present embodiment, in case of canceling generation of a command by a touch panel manipulation, for example, (1) tapping at a same position on a screen of touch panel 101 consecutively three times, or (2) long pressing (holding) a same position on a screen of touch panel 101. When the generation of command is cancelled, the coordinate input device 700, (1) is returned to just before the state, or (2) stops the operation.

Meanwhile, the coordinate input device according to each of the embodiments may be applied to portable terminals such as mobile phones, portable music players, etc., as an external device 200. In this case, the coordinate input device according to each of the embodiments may employ a touch panel provided in the portable terminal.

Incidentally, although the command plane of the coordinate input device according to each of the embodiments have been described as having the function of a music playback as its function, it is not limited to such function. For example, its function may include the function of web browser on the Internet, the recording and playback functions of a video camera, etc., the function of controlling an image regeneration of a television, etc.

Although the present invention has been described with reference to the detailed and specific embodiment aspects, it should be understood by those skilled in the art that various modifications or alterations may occur within the scope and sprit of the present invention.

Also, each function block used in the description of each embodiment may be realized typically with LSIs as an integrated circuit. Those may be formed with one separate chip, or one chip so as to include a portion thereof, or all of them. Here, although it is called LSI, it may be called IC, system LSI, super LSI and ultra LSI, depending on the degree of integration.

Also, the integration method of circuit is not limited to LSI, but may be realized by a leased circuit or a general purpose processor. After the LSI is prepared, FPGA (Field Programmable Gate Array) by which programming is possible or processor capable of reconfiguring connection or setting of internal circuit cells of LSI may be employed.

Also, if a new integration technique of circuit instead of LSI appears as a result of an improvement in a semiconductor technique or any other techniques derived from the semiconductor technique, the integration of the function block may be realized using the new technique. Biotechnology may potentially be applied.

Although the present invention has been described with reference to the detailed and specific embodiment aspects, it should be understood by those skilled in the art that various modifications or alterations may occur within the scope and sprit of the present invention.

The present application is based on Japanese Patent Application No. 2010-024404 filed on February 5, 2010, the contents of which are incorporated herein by reference.

### Industrial Applicability

The coordinate input device, coordinate input method, coordinate input program and portable terminal according to the present invention enable a user to perform a predetermined manipulation without bothering with the direction of the device, thereby having an effect of determining a desired function, thereby being useful as the portable terminal, etc.

### Reference Signs Lilst

- 100, 300, 500, 700:: coordinate input device
- 101:: touch panel
- 103:: touch panel manipulation information obtaining section
- 105:: reference determining section
- 106:: original point coincidence part
- 107:: command plane rotational part
- 109, 309:: command determining section
- 110:: command distance calculating part
- 111, 311:: command generating part
- 200:: external device
- 305:: reference unification section
- 308:: command plane enlarging/reducing part
- 310:: coordinate coincidence determining part
- 501:: long-depression manipulation information obtaining part
- 701:: line analyzing part
- 702:: line division part
- 703:: endpoint coordinate obtaining part

## Claims

1. A coordinate input device, comprising:
a contact coordinate input unit;
an obtaining unit that is configured to detect a first predetermined manipulation for the contact coordinate input unit, and obtain coordinate information on the contact coordinate input unit;
a storing unit for storing a coordinate and a function in association with each other;
a generating unit that is configured to generate a manipulation reference on the contact coordinate input unit, on the basis of the coordinate information obtained by the obtaining unit; and
a determining unit that is configured to determine the function stored by the storing unit in association with the coordinate on the basis of different coordinate information on the contact coordinate input unit that corresponds to a second predetermined manipulation, by performing the second predetermined manipulation for the contact coordinate input unit after the generating unit generates the manipulation reference.

2. The coordinate input device according to claim 1, wherein
the obtaining unit obtains the coordinate information on the contact coordinate input unit in response to a two-time tap manipulation as the first predetermined manipulation for the contact coordinate input unit, and obtains different coordinate information on the contact coordinate input unit in response to the tap manipulation as the second predetermined manipulation for the contact coordinate input unit,
the generating unit generates a manipulation reference on the contact coordinate input unit on the basis of the coordinate information obtained by the obtaining unit, and
the determining unit associates the manipulation reference generated by the generating unit with the coordinate stored by the storing unit, and determines the function stored by the storing unit in association with the coordinate, on the basis of the different coordinate information obtained by the obtaining unit.

3. The coordinate input device according to claim 1, wherein
the obtaining unit obtains the coordinate information on the contact coordinate input unit in response to a one-time tap manipulation and a one-time long depression manipulation as the first predetermined manipulation for the contact coordinate input unit, and obtains different coordinate information on the contact coordinate input unit in response to a tap manipulation as the second predetermined manipulation for the contact coordinate input unit,
the generating unit generates a manipulation reference on the contact coordinate input unit on the basis of the coordinate information obtained by the obtaining unit, and
the determining unit associates the manipulation reference generated by the generating unit with the coordinate stored by the storing unit, and determines the function stored by the storing unit in correspondence with the coordinate, on the basis of the different coordinate information obtained by the obtaining unit.

4. The coordinate input device according to claim 1, wherein
the obtaining unit obtains the coordinate information on the contact coordinate input unit and the different coordinate information on the contact coordinate input unit in response to a trace manipulation as the first predetermined manipulation and the second predetermined manipulation for the contact coordinate input unit,
the generating unit generates a manipulation reference on the contact coordinate input unit on the basis of the coordinate information obtained by the obtaining unit, and
the determining unit associates the manipulation reference generated by the generating unit with the coordinate stored by the storing unit, and determines the function stored by the storing unit in association with the coordinate, on the basis of the different coordinate information obtained by the obtaining unit.

5. The coordinate input device according to claim 1, wherein
the obtaining unit obtains first to third coordinate information in response to the first predetermined manipulation and the second predetermined manipulation for the contact coordinate input unit for three times,
the generating unit generates the reference line on the basis of the first coordinate information and the second coordinate information obtained by the first predetermined manipulation,
the storing unit has a command plane on which the function is associated with the coordinate on a first axis and a second axis crossing at right angles with the first axis, and
the determining unit rotates the command plane so that the reference line is overlapped with any one axis of the first axis and the second axis of the command plane, and determines the function on the command plane corresponding to the third coordinate information.

6. The coordinate input device according to claim 5, wherein
any one axis of the first axis and the second axis of the command plane is provided with a different reference line, and
the determining unit rotates and enlarges or reduces the command plane so that the reference line coincides with the different reference line, and determines the function on the command plane corresponding to the third coordinate information.

7. The coordinate input device according to any one of claims 1 to 6, wherein
the contact coordinate input unit is a touch panel.

8. The coordinate input device according to claim 7, wherein
the manipulation reference is determined by a tap manipulation for the touch panel, and
the function is determined by a tap manipulation for the touch panel or a long depression manipulation for the touch panel.

9. The coordinate input device according to claim 8, wherein
the manipulation reference is determined by a trace manipulation having a starting point as a position of the tap manipulation, and
the function is determined by a tap manipulation for the touch panel or a long depression manipulation for the touch panel.

10. A portable terminal provided with the coordinate input device according to any one of claims 1 to 9.

11. A coordinate input method, comprising:
detecting a first predetermined manipulation for a contact coordinate input unit, and obtaining coordinate information on the contact coordinate input unit;
storing a coordinate and a function in association with each other by a storing unit;
generating a manipulation reference on the contact coordinate input unit, on the basis of the coordinate information obtained by the obtaining unit; and
determining the function stored by the storing unit in association with the coordinate on the basis of different coordinate information on the contact coordinate input unit that corresponds to a second predetermined manipulation, by performing the second predetermined manipulation for the contact coordinate input unit after the generating unit generates the manipulation reference.

12. A coordinate input program for causing a computer to execute:
contact coordinate input means;
obtaining means for detecting a first predetermined manipulation for the contact coordinate input means, and obtaining coordinate information on the contact coordinate input means;
storing means for storing a coordinate and a function in association with each other;
generating means for generating a manipulation reference on the contact coordinate input means, on the basis of the coordinate information obtained by the obtaining means;
determining means for determining the function stored by the storing means in association with the coordinates on the basis of different coordinate information on the contact coordinate input means that corresponds to a second predetermined manipulation, by performing the second predetermined manipulation for the contact coordinate input means after the generating means generates the manipulation reference.
